# EUROPEAN PATENT SPECIFICATION

(11) **EP 1 125 513 B1**
(45) Date of publication and mention of the grant of the patent: **30.06.2004**
(21) Application number: 00108728.7
(22) Date of filing: 22.04.2000
(51) Int. Cl.: A42B 3/06, B32B 5/26

(54) **Shell laminated structure in helmet**
Schichtaufbau für die Schale eines Helms
Structure stratifiée pour coque de casque

(30) Priority: 15.02.2000 JP 2000036912
(43) Date of publication of application: 22.08.2001
(73) Proprietor: ARAI HELMET LIMITED, Ohmiya-shi Saitama-ken (JP)
(72) Inventor: Arai, Michio, c/o Arai Helmet Ltd, Ohmiya-shi, Saitama-ken (JP)
(74) Representative: Denmark, James

(56) References cited:
- US-A- 2 312 227
- US-A- 2 766 453
- US-A- 3 320 619

## Description

### BACKGROUND OF THE INVENTION

### FIELD OF THE INVENTION

This invention relates to a laminated structure in a shell of a vehicle helmet.

### DESCRIPTION OF THE RELATED ART

General structure of the helmet is to disperse point or limited area impact occurred in the event of accident to wide. In view of the foregoing, as the way for accomplishing such object, combination of a fiber-reinforced fiber plastic shell having a resiliency for dispersing the shock is generally adopted while it is hard and rigid with a shock absorbing liner of expanded polystine foam having a shock absorbing performance absorbing the shock dispersed by the shell over a wide area.

A laminated structure for the shell of a helmet is known from US-A-2 766 453 and represents the closest prior art.

### SUMMARY OF THE INVENTION

As one of the various helmet standards commonly available, Snell Standard is well-known as high level of requirement for impact management test.

Various kinds of measures should be provided to meet at the requirement by the aforesaid Snell Standard. For example, as the fiber reinforced plastic shell having glass fiber as its reinforced base material, there are provided one shell in which a thickness of the laminated layer itself is increased and the other shell molded under application of high strength glass fiber as the reinforced base material. However, in the case of the structure comprised of such a single layer of reinforced base material, a required shock absorbing characteristic can be attained, although it is hard to attain its light weight state.

In view of the foregoing, there is also provided an example in which its light weight state is realized while an shock absorbing characteristic corresponding to the Snell Standard is being assured by a method wherein a plurality of layers of reinforcing base materials having different characteristics such as non-woven fabric having a low specific weight and a resiliency are provided in addition to the aforesaid layer comprised of glass fiber and they are combined to each other in such a way that a characteristic of each of the layers may be actually realized.

It is an object of the present invention to provide a laminated structure for a shell in which a high performance for shock absorbing characteristic corresponding to such as the Snell Standard is assured and a further a light weight formation of the helmet is realized.

In the present invention, a following technical means has been employed in order to accomplish the aforesaid object.

The first means of the present invention relates to a laminated structure in which a plurality of at least two layers of reinforcing base material are laminated, each of the layers is integrally molded by synthetic resin, thereby the characteristics of each of the layers are combined to each other to realize a function required for the shell and has a feature that the net-like member constituted'by the linear raw material having a less extension or shrinkage or fibrous raw material is placed at the entire region of the shell or between the laminated layers at its part in such a manner that it may be extended along the layer where its front and rear surfaces are faced to each other, bitten into the layer and fixed there.

The second means of the present invention relates to a laminated structure in which a plurality of at least two layers of reinforcing base material are laminated, each of the layers is integrally molded by synthetic resin, thereby the characteristics of each of the layers are combined to each other to realize a function required for the shell and has a feature that the sheet-like member constituted by opening many holes in the cloth-like or film-like sheet material having less extension or shrinkage is placed at the entire region of the shell or between the laminated layers at its part in such a manner that it may be extended along the layer where its front and rear surfaces are opposed to each other, bitten into the layer and fixed there.

In accordance with the present invention, the net-like member of raw material having less extension or shrinkage characteristic arranged at the shell, or sheet-like member is put into the non-woven fabric, set to be hardened and integrally assembled. Then either this net-like member or sheet-like member may restrict the extension or shrinkage of the shell and improve a bending stress of the shell. Accordingly, an occurrence of inter-layer removal is restricted under an improvement of the bending stress of the shell and it can be expected that an improvement of the shock absorbing characteristic is applied.

In the present invention, to apply any number of layers may mean more than one layer, however, at least an outer layer and an inner layer in the net-like member are made of FRP and in the case of two layers, the outer layer and the inner layer are integrally molded to each other under a state in which the net-like member or a sheet-like member is placed between the layers during a molding operation. In addition, also in the case of three layers having an intermediate layer, the outer layer, the inner layer and the intermediate layer are integrally molded from each other under a state in which the net-like member or a sheet-like member is placed between the layers during a molding operation. This intermediate layer is a non-woven fabric formed into a mat-shape or cloth or film, for example.

This high strength fiber defined herein may usually include all kinds of fiber used for constituting the shell of the helmet, and for example, glass fibers, high strength plastic fibers and carbon fibers and the like can be applied. In addition, synthetic resins immersed into the high strength fibers may usually include all kinds of resin used for constituting the shell of the helmet, and for example, non-saturated polyester resin, epoxy resin or the like can be applied.

Although either the aforesaid net-like member or the sheet-like member can be used in either an entire region of the shell or a part of it, in the case that the part of the shell is provided with the net-like member or the sheet-like member, it is preferable that the net-like member or the sheet-like member is used at least at the rear head portions, side head portions and the top head portions.

It is preferable that a size of the net opening or the hole in the aforesaid net-like member or the sheet-like member is in a range of 2 mm to 45 mm in its length or diameter. This is due to the fact that in the case that the size is lower than 2 mm, the resin is hardly passed through the hole and there occurs a possibility that a resin biting at the biting section becomes insufficient and in the case that the size exceeds 45 mm, the net-like opening or hole is excessively large, extension or shrinkage between each of the layers can not be controlled and there is also a possibility that the inter-layer peeling may be produced in the net opening or the hole.

It is preferable that a size of the net portion or non-opened hole at the aforesaid net-like member or sheet-like member is in a range of 0.1 mm to 4 mm in view of its diameter or width and height, respectively. This is due to the fact that there occurs a possibility that if the size is lower than 0.1 mm, its strength and a biting amount at this part may be lack and in the case that the size exceeds 4 mm, there occurs a possibility that its weight may be increased.

In addition to the aforesaid net-like member or the sheet-like member, it may be applicable that there is provided a structure having a configuration in which both front surface and rear surface of it are provided with many protrusions and the protrusions may bite into each of the layers and fixed there.

### BRIEF DESCRIPTION OF THE DRAWINGS

Fig. 1 is a perspective view for showing a shell of laminated structure in the present invention with a part being broken away.
Fig. 2 is an enlarged sectional view taken along line II-II of Fig. 1. '
Fig. 3 is a top plan view for showing a part of a net-like member.

### DESCRIPTION OF THE PREFERRED EMBODIMENT(S)

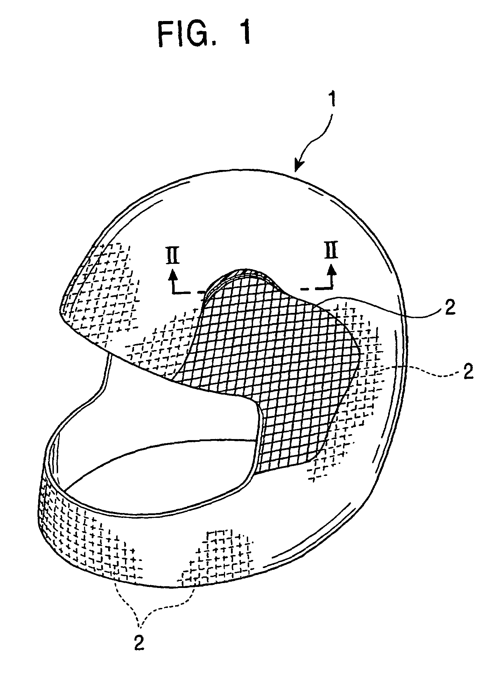

Referring now to the drawings, one preferred embodiment of the present invention will be described as follows. Fig. 1 shows the shell molded by the laminated structure of the present invention, wherein the shell for the full-face type helmet is shown. The present invention is not restricted to the shell for the full-face type helmet illustrated therein, but the present invention is applied to all types of helmet shells.

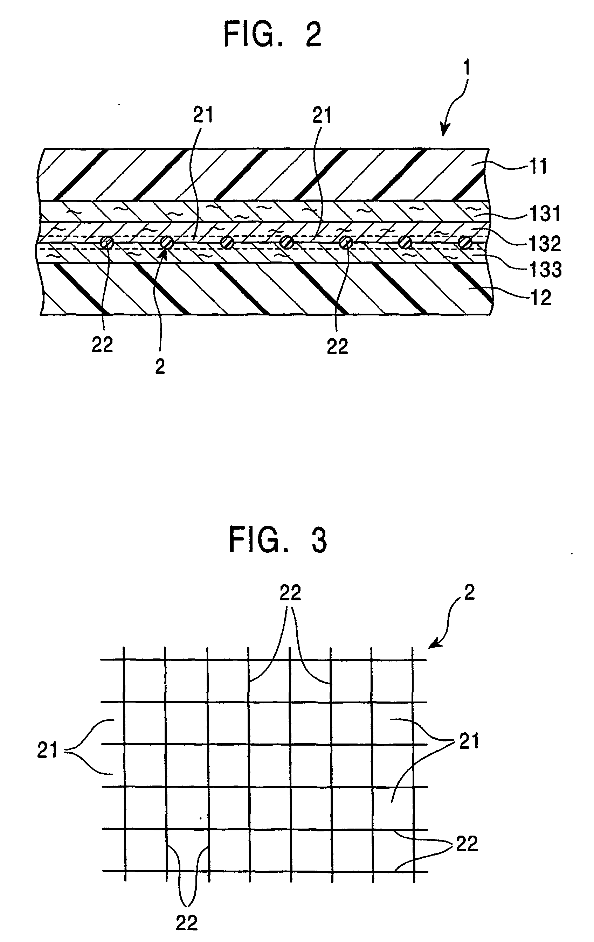

The shell 1 illustrated therein is made such that as shown in Fig. 2, the outer layer 11 and the inner layer 12 are made of FRP and three layers of non-woven fabrics 131, 132 and 133 formed into a mat-shape are applied to the intermediate layer 13, an item having each of the layers integrally molded with synthetic fiber is applied as a basic element and then the net-like member 2 is placed between the non-woven fabrics 132 and 133.

The net-like member 2 is a molded product formed by applying light weight raw material having a less amount of extension or shrinkage such as thermoplastic resin (such as polyethylene, polystylene, polypropylene, polyvinyl chloride and the like) or thermosetting resin (phenol resin, yuria resin, meramine resin). In addition, it may also be applicable that the threads of chemical fiber or natural fiber are applied to form a knitted net-like member.

The net-like member 2 is made such that net openings 21...21 are of 14 mm□ and a diameter of each of the net portions 22...22 is about 2 mm and the net-like member is molded in compliance with the shape of the shell 1. As shown in Fig. 2, the net-like member 2 is hardened such that the synthetic resin in the non-woven fabrics 132, 133 is passed through the net openings 21...21 under the placed state and hardened to enclose the net portions 22...22 and then the net-like member 2 is hardened and integrally formed under a state in which the front surface and the rear surface of the net portions 22...22 are put into the non-woven fabrics 132, 132 with respect to each other.

Further, the present invention is not limited to one in which the aforesaid net-like member is present at the illustrated position and in the illustrated number, but its position and number are optional. For example, the aforesaid net-like member may be present between each of all the layers and present among all the non-woven fabrics 131, 132 and 133.

### [Preferred Embodiment]

In Table 1 is indicated the result in which a shock absorbing test for each of the helmet provided with the shell embodying the present invention and the helmet provided with the prior art shell is performed under the following measuring method to measure the shock absorbing characteristics.

### - Helmet structure used in measurement:

### A. Product of the present invention:

A shell having a net-like member in which an intermediate layer comprised of three layers of non-woven fabrics is present between an FRP inner layer and an FRP outer layer, a square net opening with a side size of 14 mm is present between the second layer and the third layer and a diameter of the net portion is about 2 mm. The net-like member is a molded product of polypropylene.

### B. Product of comparison:

A shell in which an intermediate layer comprised of non-woven fabric of three layers is present between one inner FRP layer and one FRP outer layer. In addition, all the components other than the net-like member are made of those of the present invention and each of the layers having the same thickness to each other is constituted to have the same structure. The shock absorbing performance of the helmet using this structure is not suitable for the Snell Standard.

The shock absorbing liners of the above A and B are made of expanded polystine foam having the same structure and their thickness is about 30 to 35 mm.

### Measuring method:

This is a impact management test performed in accordance with the latest Snell Standard in such a way the helmet is mounted on test head form having a mass of 5 kg, the helmet is dropped on a hemispherical anvil with 48mm of radius of made of steel to cause a desired shock energy amount (J) to act on the helmet itself and then peak acceleration (G) at that time is measured as the 1^{st} impact.

More practically, at the 1^{st} impact, the helmet is dropped from a height of 3.12 m and then an amount of impact energy of 150J is applied to the helmet. At the second impact, the helmet is dropped from a height of 2.22 m for the same impact point and an amount of impact energy of 110 J is applied to the helmet. If the helmet can endure against the value of less than 300G peak acceleration for both impacts, the helmet performs this test.

Test location: Both right and left side head portions for both A and B.

Shell thickness at the testing location: 2.5 to 2.8 mm

**[Table 1]**

| Unit (G) | | |
|---|---|---|
| | 1^{st} impact | 2^{nd} impact |
| A: left side head portion | 151 | 191 |
| A: right side head portion | 142 | 176 |
| B: left side head portion | 159 | 327 |
| B: right side head portion | 150 | 378 |

As apparent from the aforesaid test result, as the shock absorbing characteristic of the helmet using the shell of the present invention, a numerical value of less than 300G peak acceleration has been attained for both cases. Further, the fact that this numerical value has been attained even though the structure of the shell of the product of the present invention has the same structure as that of the comparison product proves that the presence of the aforesaid net-like member has a remarkable effect in view of improving a shock absorbing performance. In other words, a mere presence of the net-like member at the shell of the comparison product not passing the Snell Standard makes a helmet have improvement for shock absorbing characteristic. Accordingly, it has been proved that the present invention provides a laminated structure of the shell in which the helmet having a further light weight formation can be realized after having improvement for shock absorbing characteristic without making the FRP layer of the prior art thicker.

In reference to this result, it may be considered that the net-like member acting as raw material having a less amount of extension or shrinkage which is present at the shell of the present invention is bitten into non-woven fabrics from each other, hardened and integrally assembled, thereby the extension or shrinkage of the shell caused by the shock is restricted to improve a bending stress of the shell. Then, it is assumed that the occurrence of peeling-off of the inter-layer is restricted by improving the bending stress of the shell and the shock absorbing performance is improved.

A reason why the right and left side head portions are set as shock applying locations in this test consists in the fact that these locations are positions where the shock is mostly applied at the time of accident, the numerical values passing the standard can be attained at these locations.

Then, a result of measurement of peak acceleration (G) of the helmet with the net-like member having a size of the net opening which is different from that described above being placed in it is indicated in Table 2 below. The structure of the helmet applied in this test is similar to that applied in the aforesaid test and during this test, only the right side head portion was measured. A unit of mm□ shows a size of the net opening.

**[Table 2]**

| Unit (G) | | |
|---|---|---|
| | 1^{st} impact | 2^{nd} impact |
| 3 mm□ | 153 | 253 |
| 4 mm□ | 139 | 179 |
| 40 mm□ | 164 | 228 |
| 50 mm□ | 176 | 376 |

In reference to the result of tests described above, it has been proved that the numerical values passing the Snell Standard can be attained within a range of size of the net opening of 3 mm□ to 40 mm□ and if the net-like member having this range is applied, a requisite shock absorbing characteristic can be applied to the helmet by placing the net-like member to the helmet not passing the Snell Standard in the same manner as that found in the test result shown in the Table 1 indicated above.

Assuming the upper limit and the lower limit of the shock absorbing performance in reference to the aforesaid result of test, it may be considered that the upper limit is 45 mm □ and the lower limit is 2 mm□.

In addition, it is preferable that the shock absorbing performance has a certain surplus amount and it is desirable to have a numerical value not exceeding 200G as the result of our examination that we tried to plot out low level peak acceleration (G) within the examination. In this case, it is assumed that the application of the net-like member having the net opening within 4 mm□ or more and 35 mm□ or less is the most preferable one.

In addition, in reference to an area of the net opening, if this area is set within a range of 4 mm² to 2025 mm², more preferably within a range of 16 mm² to 1225 mm², it is possible to apply a requisite shock absorbing characteristic, so that polygon such as a rectangle and a triangle or a circle such as a true circle, an ellipse other than the square net opening applied to the test can be expected to have a similar effect.

Further, if the net section has a strength not to be cut when the shock in the aforesaid test is applied to the helmet, a diameter of the net section may be sufficiently lower than 2 mm. In addition, if the diameter of the net-like member is of such a value as one not influencing its weight, a value exceeding 2 mm can be applied. That is, the diameter of the net opening is determined within a range durable against the shock and not influencing against its weight.

In addition, although the net-like member applied to the test is a product made of polypropylene, a similar effect can also be expected in the aforesaid raw material. Further, a similar effect can also be expected in the net-like member which is knitted into a net with threads spun with chemical fibers or natural fibers. Further, even if a sheet-like member constituted by opening many holes in the film-like sheet material in place of net-like member, a similar effect can be expected.

As described above, the present invention may constitute a helmet having a substantial improved shock absorbing performance without increasing an amount of glass fiber by applying a shell of laminated structure in which either the net-like member or the sheet-like member is placed between the layers of the reinforcing base material. Accordingly, the present invention is a quite useful shell laminated structure in which a further light weight of the helmet can be realized while improvement for shock absorbing characteristic corresponding to the Snell Standard is assured.

Having described specific preferred embodiments of the invention with reference to the accompanying drawings, it will be appreciated that the present invention is not limited to those precise embodiments, and that various changes and modifications can be effected therein by one of ordinary skill in the art without departing from the scope of the invention as defined by the appended claims.

## Claims

1. A shell laminated structure comprising at least two layers (11, 12) of reinforcing base material and the layers being laminated, and wherein characteristics of each of the layers are combined to each other so as to realize a function required for the shell;
wherein a net-like member (2) constituted by either linear or fibrous raw material is placed between the laminated layers (11, 12) at either an entire region or a part of the shell in such a manner as one in which its front and rear surfaces are extended along their opposing layers, bitten into the layers and fixed there; **characterised in that** each of the layers are integrally molded of synthetic resin and the net-like member (2) has less extension or shrinkage than the layers of reinforcing base material (11, 12).

2. A shell laminated structure comprising at least two layers (11, 12) of reinforcing base material and the layers being laminated, and wherein characteristics of each of the layers are combined to each other so as to realize a function required for the shell;
wherein a sheet-like member (2) constituted by opening many holes in either cloth-like or film-like sheet material is placed between the laminated layers (11, 12) at either an entire region or a part of the shell in such a manner as one in which its front and rear surfaces are extended along their opposing layers, bitten into the layers and fixed there; **characterised in that** each of the layers are integrally molded of synthetic resin and the sheet-like member (2) has less extension or shrinkage than the layers of reinforcing base material (11, 12).

## Patentansprüche

1. Schale mit Schichtaufbau, umfassend wenigstens zwei Schichten (11, 12) aus Verstärkungsgrundmaterial und wobei die Schichten geschichtet sind und wobei die Eigenschaften jeder der Schichten miteinander kombiniert werden, um eine für die Schale erforderliche Funktion zu realisieren,
wobei ein netzartiges Element (2), das von einem linearen oder faserigen Rohstoff gebildet wird, entweder am gesamten Bereich oder einem Teil der Schale auf eine Weise zwischen die geschichteten Schichten (11, 12) gelegt wird, bei der ihre Vorder- und Rückseiten sich entlang ihrer gegenüberliegenden Schichten erstreckend angeordnet, mit den Schichten in Eingriff gebracht und dort fixiert sind,
**dadurch gekennzeichnet, dass** jede der Schichten aus Kunstharz integral geformt ist und das netzartige Element (2) weniger Dehnung oder Schrumpfung als die Schichten aus Verstärkungsgrundmaterial (11, 12) hat.

2. Schale mit Schichtaufbau, umfassend wenigstens zwei Schichten (11, 12) aus Verstärkungsgrundmaterial und wobei die Schichten geschichtet sind und wobei die Eigenschaften jeder der Schichten miteinander kombiniert werden, um eine für die Schale erforderliche Funktion zu realisieren,
wobei ein blattartiges Element (2), das durch Anbringen vieler Löcher in einem tuchartigen oder folienartigen flächigen Material gebildet wird, entweder am gesamten Bereich oder einem Teil der Schale auf eine Weise zwischen die geschichteten Schichten (11, 12) gelegt wird, bei der ihre Vorder- und Rückseiten sich entlang ihrer gegenüberliegenden Schichten erstreckend angeordnet, mit den Schichten in Eingriff gebracht und dort fixiert sind,
**dadurch gekennzeichnet, dass** jede der Schichten aus Kunstharz integral geformt ist und das netzartige Element (2) weniger Dehnung oder Schrumpfung als die Schichten aus Verstärkungsgrundmaterial (11, 12) hat.

## Revendications

1. Structure stratifiée pour coque comprenant au moins deux couches (11, 12) de matériau de base de renfort, les couches étant stratifiées, tandis que les caractéristiques de chacune des couches sont combinées les unes aux autres pour réaliser une fonction nécessaire à la coque ;
tandis qu'un membre en forme de maillage (2) constitué par la matière brute linéaire ou par la matière première fibreuse, est placé entre les couches stratifiées (11, 12) au niveau d'une région entière de la coque ou une partie de la coque de telle sorte que ses surfaces avant et arrière s'étendent le long de leurs couches opposées, pénétrant dans les couches et fixées à cet endroit,
**caractérisée en ce que** chacune des couches est moulée intégralement en résine synthétique et que le membre en forme de maillage (2) a moins de dilatation et moins de rétrécissement que les couches du matériau de base de renfort (11, 12)

2. Structure stratifiée dans pour coque comprenant au moins deux couches (11, 12) de matériau de base de renfort, les couches étant stratifiées, tandis que les caractéristiques de chacune des couches sont combinées les unes aux autres pour réaliser une fonction nécessaire à la coque ;
tandis qu'un membre en forme de maillage (2) constitué par l'ouverture de nombreux trous dans un matériau en feuille sous forme de toile ou sous forme de film est placé entre les couches stratifiées (11, 12) au niveau d'une région entière de la coque ou une partie de la coque de telle sorte que ses surfaces avant et arrière s'étendent le long de leurs couches opposées, pénétrant dans les couches et fixées à cet endroit,
**caractérisée en ce que** chacune des couches est moulée intégralement en résine synthétique et que le membre en forme de feuille (2) a moins de dilatation et moins de rétrécissement que les couches du matériau de base de renfort (11, 12).
